# EUROPÄISCHE PATENTSCHRIFT

(11) **EP 0 974 308 B1**
(45) Veröffentlichungstag und Bekanntmachung des Hinweises auf die Patenterteilung: **06.10.2004**
(21) Anmeldenummer: 99114082.3
(22) Anmeldetag: 20.07.1999
(51) Int. Cl.: A61C 1/05

(54) **Turbinen-Handstück, insbesondere für medizinische oder dentalmedizinische Zwecke**
Turbine operated handpiece, in particular for medical or dental use
Pièce à main à turbine, en particulier pour des applications médicales ou dentaires

(30) Priorität: 23.07.1998 DE 19833249
(43) Veröffentlichungstag der Anmeldung: 26.01.2000
(73) Patentinhaber: Kaltenbach & Voigt GmbH & Co. KG, 88400 Biberach/Riss (DE)
(72) Erfinder: Bareth, Erich, 88444 Ummendorf (DE); Mohr, Eugen, 88444 Ummendorf (DE)
(74) Vertreter: Schmidt-Evers, Jürgen, Dipl.-Ing.

(56) Entgegenhaltungen:
- DE-A- 4 338 243
- DE-C- 4 428 039
- US-A- 5 158 456
- US-A- 5 507 642

## Beschreibung

Die Erfindung bezieht sich auf ein Turbinen-Handstück nach dem Oberbegriff des Anspruchs 1.

An medizinischen oder zahnmedizinischen Behandlungsplätzen und auch in medizinischen oder dentalmedizinischen Labors haben sich Handstücke mit zwei Hauptantriebsarten durchgesetzt, nämlich zum einen sogenannte Motor-Handstücke, deren Antriebswelle für das Werkzeug mit einer Elektromotor angetrieben wird, und Turbinen-Handstücke, deren Antriebswelle durch eine im vorderen Endbereich des Handstücks angeordneten Turbine in Antriebsverbindung steht, die mit einem Druckmittel angetrieben wird, insbesondere Druckluft. Auf ein letzteres Handstück bezieht sich die Erfindung.

Bei einem solchen Turbinen-Handstück ist ein Turbinenrad in einer wesentlichen runden Turbinenkammer frei drehbar gelagert. Das Druckmittel wird durch eine sich längs im Handstück erstreckende Zuführleitung zugeführt, die durch eine Einlaßöffnung in der Turbinenkammer auf das Turbinenrad strömt, das Turbinenrad in Rotation versetzt und die Turbinenkammer durch eine Auslaßöffnung und eine sich daran anschließende Abführleitung verläßt. Der Antrieb der Turbine wird durch das Schließen eines Ventils in der Zuführleitung abgeschaltet. Da das Handstück mit sehr hohen Drehzahlen betrieben wird, läuft das Turbinenrad nach Abschaltung der Druckmittelzufahr noch eine beträchtliche Zeit nach, wobei es das Druckmittel aus der Turbinenkammer in die Abführleitung drückt und somit als Pumpe wirkt. Durch den dabei in der Turbinenkammer entstehenden Unterdruck wird ein Saugeffekt unter anderem in Luftspalten im Bereich der Werkzeugspannung erzeugt. Dies ist unerwünscht, da Krankheitserreger in das Handstück eingesaugt werden können, wo eine Desinfektion nur unzureichend oder garnicht möglich ist.

Um den vorbeschriebenen Ein- bzw. Rücksaugeffekt zu beseitigen, ist gemäß DE 195 29 668 A1 ein Handstück entwickelt worden, in dessen Abführleitung ein Absperrventil angeordnet ist, das durch den Druck des zugeführten Druckmittels aufgeteuert wird und nach einem Abschalten der Druckmittelzuführung selbsttätig schließt, so daß die Turbine eine Pumpenfunktion nicht ausführen kann. Dieses bekannte Handstück hat sich in der Praxis als eine vorteilhafte Lösung erwiesen, jedoch ist die Anordnung eines schaltbaren Absperrventils aufwendig und kostenintensiv.

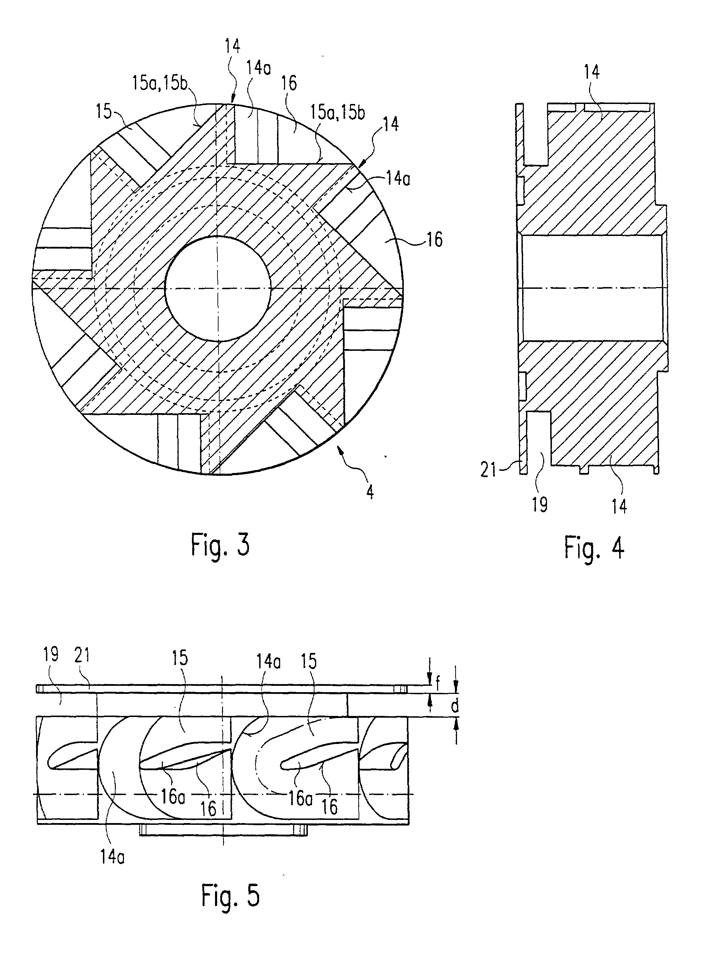

Ein Turbinen-Handstück der eingangs angegebenen Art ist in der US 5 507 642 A beschrieben. Aus dieser Druckschrift sind mehrere unterschiedliche Mittel zu entnehmen, die nach einer Abschaltung der Druckmittelzuführung während des Nachlaufens des Turbinenrades einen Auslaß des in der Turbinenkammer rotierenden Druckmittels durch die Abführleitung verhindern. Bei dem in Fig. 3 und 4 dargestellten Ausführungsbeispiel ist das Mittel durch eine im Bereich der Turbinenkammer angeordnete Ringscheibe gebildet, die nach einer Abschaltung der Druckmittelzuführung den Durchgang des Druckmittels durch die Auslaßöffnung sperrt und dadurch einen Unterdruck und ein dadurch hervorgerufenes Nachsaugen beim Nachlaufen der Turbine verhindert.

Der Erfindung liegt die Aufgabe zugrunde, eine einfache und preiswerte Ausgestaltung zur Verhinderung der Pumpenfunktion bzw. des Ein- bzw. Rücksaugens zu finden.

Diese Aufgabe wird durch die Merkmale des Anspruchs 1 gelöst.

Beim erfindungsgemäßen Handstück ist ein das Einsaugen verhinderndes Mittel im Bereich der Turbinenkammer angeordnet, das im Funktionsbetrieb des Handstücks das in der Turbinenkammer rotierende Druckmittel an der Auslaßöffnung vorbei lenkt. Hierdurch ist das Druckmittel daran gehindert, durch die Auslaßöffnung auszutreten. Deshalb kann auch beim Nachlaufen des Turbinenrades nach dem Abschalten der Druckmittelzufuhr keine Pumpfunktion und somit weder ein Unterdruck in der Turbinenkammer entstehen noch ein Einsaugen stattfinden. Die erfindungsgemäße Funktion beruht darauf, daß der in der Turbinenkammer rotierende Druckmittelstrom sozusagen einen sich vor der Auslaßöffnung erstreckenden Vorhang bildet, der den Austritt des Druckmittels durch die Auslaßöffnung verhindert. Der Erfindung liegt somit die Erkenntnis zugrunde, daß das rotierende Druckmittel selbst einen Verschluß" der Auslaßöffnung bilden kann, wenn es an der Austrittsöffnung vorbei gelenkt wird. Hierbei kann es sich um eine laminare Strömung handeln oder auch um eine Wirbelzone. Wesentlich ist, daß im Bereich der Auslaßöffnung die Strömung einen Weg nimmt, auf dem sie sich selbst daran hindert, durch die Auslaßöffnung auszutreten. Die Erreichung dieses Ziels wird dadurch vereinfacht, daß der Druck im nach dem Abschalten in der Turbinenkammer rotierenden Druckmittel weitgehend dem Raumdruck entspricht und somit im wesentlichen "drucklos" ist und deshalb bereits ein verhältnismäßig schwacher Strömungsvorhang vor der Auslaßöffnung den Austritt durch diese verhindern kann. Die angestrebte Strömungsablenkung läßt sich durch eine in die Strömung hineinragende Strömungsstufe erzielen, die dem rotierenden und deshalb unter einer Fliehkraft stehenden Druckmittel einen nach innen versetzten Strömungsweg aufzwingt, wobei die Strömung bereits an der Auslaßöffnung vorbei ist, wenn der durch die Stufe erzeugte Strömungsversatz nicht mehr vorhanden ist. Die Funktion der erfindungsgemäßen Stufe läßt sich mit einer Skisprungschanze vergleichen, wenn der hinter der Absprungkante vorhandene Raum als Auslaßöffnung betrachtet wird. Da es sich bei dem an der Auslaßöffnung vorbei zu lenkenden Medium um ein Gas, insbesondere Druckluft, handelt, ist davon auszugehen, daß ein absoluter Strömungsvorhang-Verschluß kaum zu erreichen sein wird. Es hat sich bei Versuchen jedoch gezeigt, daß eine erfindungsgemäße Strömungsablenkung nach innen von der vorherigen Strömungsrichtung einen Austritt des Druckmittels durch die Auslaßöffnung soweit verhindert hat, daß sich ein schädlicher Unterdruck in der Turbinenkammer nicht aufbaut und das Ein- bzw. Rücksaugen wirksam verhindert wird.

Die Erfindung bezweckt im weiteren bei dem Turbinen-Handstück die Funktion und/oder Leistungsfähigkeit zu verbessern.

Dies wird durch die Merkmale des Anspruchs 15 erreicht. Bei dieser Weiterbildung durchströmt das Druckmittel die Turbinenschaufeln axial, wobei es sich hinter den Schaufeln in eine Ringkammer entspannen kann, aus der es durch die Auslaßöffnung abströmen kann. Bei einer solchen Ausgestaltung ist ein vorteilhafter Strömungsweg vorgegeben, auf dem dem Druckmittel ein verhältnismäßig geringer Strömungswiderstand entgegensteht. Hierdurch werden sowohl der Lauf der Turbine als auch die Leistungsfähigkeit des Turbinen-Handstücks verbessert. Außerdem ist diese erfindungsgemäße Ausgestaltung von einfacher und kostengünstig herstellbarer Ausgestaltung, wodurch die Herstellung vereinfacht und kostengünstiger durchgeführt werden kann.

In den Unteransprüchen sind Merkmale enthalten, die zu weiteren einfachen und kostengünstig herstellbaren und kleinen Bauweisen führen, die bei den vorgegebenen beengten Raumverhältnissen zu wirksamen Vorteilen führen.

Nachfolgend werden die Erfindung und weitere durch sie erzielbare Vorteile anhand von vorteilhaften Ausführungsbeispielen und Zeichnungen näher erläutert. Es zeigen
- Fig. 1: den vorderen Endbereich eines erfindungsgemäßen Handstücks im axialen Vertikalschnitt;
- Fig. 2: eine Einzelheit des Handstücks in der in Fig. 1 mit einem Pfeil X verdeutlichten Blickrichtung in vergrößerter Darstellung;
- Fig. 3: ein Turbinenrad im diagonalen Schnitt;
- Fig. 4: das Turbinenrad im axialen Schnitt;
- Fig. 5: das Turbinenrad in der Draufsicht;
- Fig. 6: ein Turbinenrad in abgewandelter Ausgestaltung im diagonalen Schnitt;
- Fig. 7: das Turbinenrad nach Fig. 6 in der Draufsicht;
- Fig. 8: den Teilschnitt VIII-VIII in Fig. 2;
- Fig. 9: den Teilschnitt VIII-VIII in abgewandelter Ausgestaltung;
- Fig. 10: den Teilschnitt VIII-VIII in weiter abgewandelter Ausgestaltung;
- Fig. 11: den Teilschnitt XI-XI in Fig. 10;
- Fig. 12: den Teilschnitt XI-XI in abgewandelter Ausgestaltung;
- Fig. 13: eine besondere erfindungsgemäße Ausgestaltung an einer Einsatzhülse;
- Fig. 14: die Einsatzhülse in der Seitenansicht von links;
- Fig. 15: die Einsatzhülse in der Stirnansicht.

Bei dem Handstück 1 handelt es sich um einen stabförmigen Griffkörper, der mit seinem nicht dargestellten hinteren Ende an ein sogenanntes Anschlußteil ankuppelbar ist, das mit einer flexiblen Versorgungsleitung für Antriebsenergie und Hilfsmedien verbunden ist, wie es üblich ist. Im vorderen Endbereich des Handstücks 1 ist eine Antriebswelle 2 für ein Werkzeug in einer Kammer drehbar gelagert, wobei das nicht dargestellte Werkzeug durch eine im einzelnen ebenfalls nicht dargestellte Verbindungs- oder Spannvorrichtung mit der Antriebswelle 2 verbindbar ist. Hierzu durchragt die Antriebswelle 2 ein Loch in einem Kopf-Gehäuse 1a des Handstücks 1, so daß das Werkzeug von außen in die hohle Steckfassung Antriebswelle 2 einsteckbar ist. Die Antriebswelle 2 ist durch eine Turbine 3 antreibbar, deren Turbinenrad 4 auf der Antriebswelle 2 drehfest angeordnet ist, vorzugsweise einteilig mit diesem hergestellt ist, und mit allseitigem Bewegungsspiel in einer Turbinenkammer 5 frei drehbar gelagert ist, die eine kreisrunde Basis-Querschnittsform aufweist. Zu beiden Seiten des Turbinenrades 4 sind an der Antriebswelle 2 Lageransätze 2a angeordnet, die als Gleitlager oder Wälzlager ausgebildet und im Handstück gelagert und abgedichtet sind.

Bei der vorliegenden Ausgestaltung erstreckt sich die Stabform des Handstücks 1 gerade oder in an sich bekannter Weise abgewinkelt (Winkelstück), wobei die Drehachse 6 der Antriebswelle 2 sich quer zur Längsmittelachse 7 des Handstückkörpers im Sinne eines sogenannten Winkelkopfes erstreckt. Die Antriebswelle 2 mit dem Turbinenrad 4 ist von der dem Werkzeug abgewandten Seite her montierbar und ausbaubar angeordnet. Hierzu ist das Gehäuse 1a auf jener Seite durch eine Gewindescheibe 8 verschlossen, an der eine Drucktaste 9 gelagert ist, mit der das Werkzeug aus der nicht dargestellten Werkzeug-Spannvorrichtung gelöst werden kann.

Die Turbine 3 ist durch ein Druckmittel betreibbar, insbesondere Druckluft. Zur Zu- und Abführung dienen eine Zuführleitung 11 und eine Abführungsleitung 12, die sich längs durch den Handstückkörper erstrecken und mittels der vorerwähnten Verbindungskupplung an in der Versorgungsleitung verlaufenden weiteren Zu- und Abführungsleitungsabschnitten verbindbar ist.

Die Zuführleitung 11 mündet an einer Einlaßöffnung 11a in die Turbinenkammer 5, die bezüglich dieser mit dem Mündungsabschnitt der Zuführleitung 11 sekantial verläuft und beim vorliegenden Ausführungsbeispiel axial außermittig versetzt angeordnet ist, siehe Versetzungsmaß a. Die Abführungsleitung 12 erstreckt sich von einer Auslaßöffnung 12a, die eine größere Querschnittsfläche aufweist als die Querschnittsfläche der Einlaßöffnung 11 a und zur anderen Seite um das Versetzungsmaß b versetzt ist, vorzugsweise so weit, daß sie mit dem zugehörigen Seitenrand 13 der Turbinenkammer 5 abschließt. Bei der vorliegenden Ausgestaltung weist die Auslaßöffnung 12a die Form eines Langlochs mit halbkreisförmig gerundeten Langlochenden auf, das bezüglich einer die Drehachse 6 enthaltenden Längsmittelebene E etwa mittig angeordnet ist. Die quer zur Drehachse 6 verlaufende Länge L1 des Langlochs bzw. der Auslaßöffnung 12a ist größer als die axiale Abmessung L2. Quer zur Längsmittelebene E gesehen sind die Öffnung 11a, 12a und die Zuführ- und Abführleitungen 11, 12 übereinander angeordnet, wobei die Auslaßöffnung 12a und die Abführleitung 12 sich oben befinden.

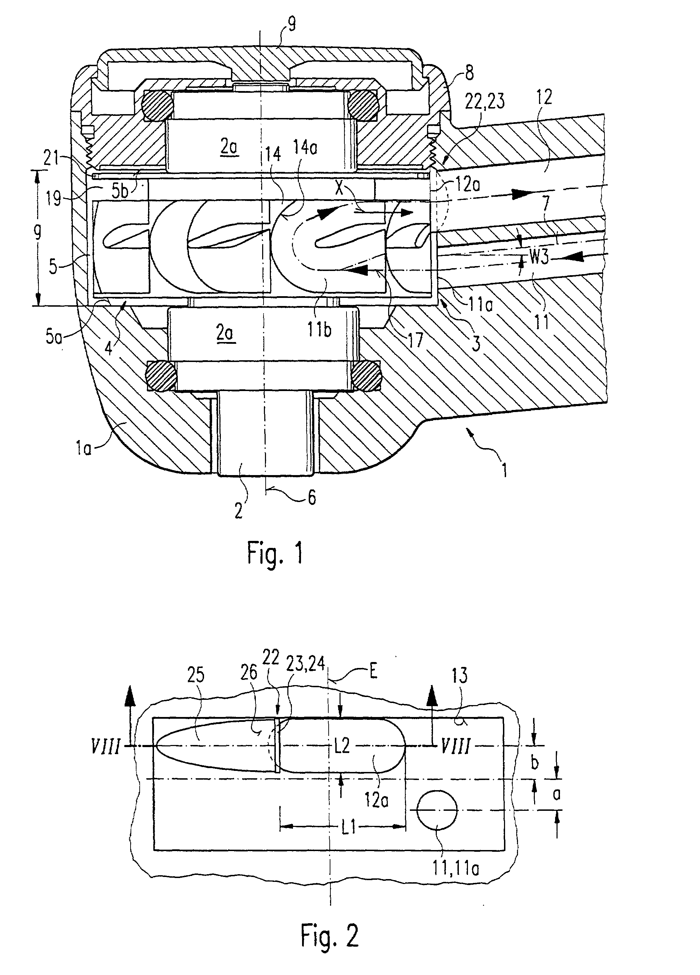

Das Turbinenrad 4 kann einteilig mit der Antriebswelle 2 ausgebildet sein, wobei es im wesentlichen durch einen zylindrischen Körper gebildet ist, der an seinem Umfang eine Mehrzahl Schaufeln 14 mit sich quer zur Längsrichtung des Handstücks 1 erstreckenden Schaufelflächen 14a die vorzugsweise bezüglich der Einströmrichtung konkave zylinderabschnittförmige Flächen gebildet sind, die Begrenzungsflächen von in der Mantelfläche angeordneten winkelförmigen Ausnehmungen 15 sind, deren insbesondere ebenen Grundflächen 15a abgesehen von der konkaven Form der Schaufelflächen 14a an beiden Seiten auslaufen und jeweils eine Rückenfläche 15b der vorherigen Schaufel 14 bilden. Bei der Ausgestaltung gemäß Fig. 1 und 3 bis 5 sind den Schaufelflächen 14a jeweils ein Mittelsteg 16 vorgeordnet, der sich von der Grundfläche 15a radial nach außen erstreckt und an der gedachten zylindrischen Außenhülle des Turbinenrades 4 endet, so daß auch die Mantelflächenabschnitte 16a der Mittelstege 16 sich in der zylindrischen Hülle befinden. In der Draufsicht gesehen, befinden sich die Mittelstege 16 etwa in einer mittleren Querebene des Turbinenrades 7, wobei die Einlaßöffnung 11a etwa in Flucht mit einem sich zwischen den Mittelstegen 16 und der zugehörigen Seitenwand 5a der Turbinenkammer 5 vorhandenen Einlaßkanal 11b angeordnet ist. Die Mittelstege 16 erstrecken sich in Umfangsrichtung bezüglich der Einströmrichtung 17 konvergent oder schräg mit gerundetem in die Drehrichtung 18 weisendem Stegscheitel, wodurch die Leistung der Turbine 3 vergrößert wird. Die Mittelstege 16 bewirken eine Leitung der Druckmittelströmung auf die eine Seite der Schaufelflächen 14a, wobei das Druckmittel die Schaufeln 14 an den gerundeten Schaufelflächen 14a axial durchströmt.

Auf der anderen Seite des Turbinenrades 4 ist eine Ringkammer 19 im Turbinenrad 4 angeordnet, die sich im Bereich der Auslaßöffnung 12a befindet und durch eine radial und stirnseitig offene Ausnehmung oder durch eine gegebenenfalls endnahe Ringnut gebildet sein kann, wobei die Ringkammer 19 stirnseitig von einem dünnen Turbinenradsteg 21 begrenzt ist, der Teil des Turbinenradkörpers ist und mit Bewegungsspiel mit der benachbarten Seitenwand 5b der Turbinenkammer zusammenwirkt.

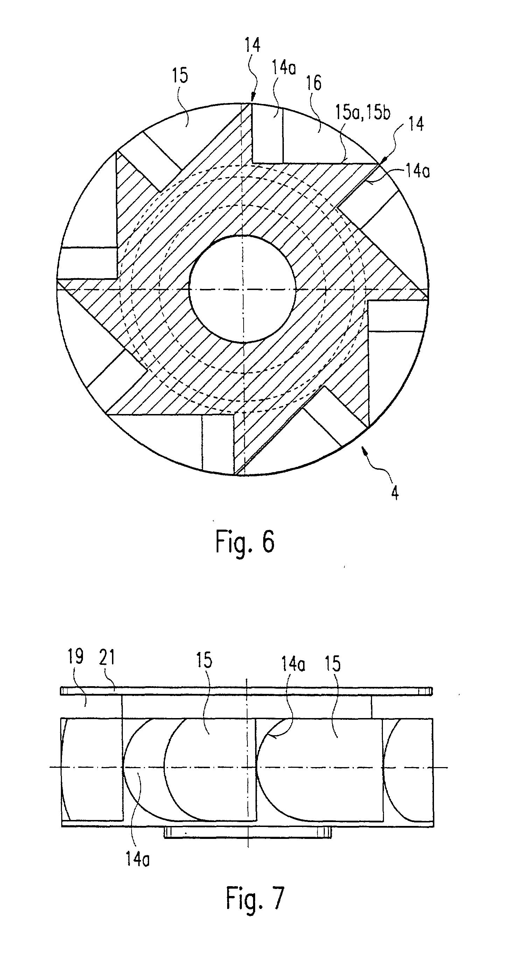

Das Turbinenrad 4 nach Fig. 6 und 7 unterscheidet sich vom Turbinenrad 4 nach Fig. 3 bis 5 dadurch, daß die Mittelstege 16 fehlen. Ein solches Turbinenrad 4 ist ebenfalls funktionsfähig.

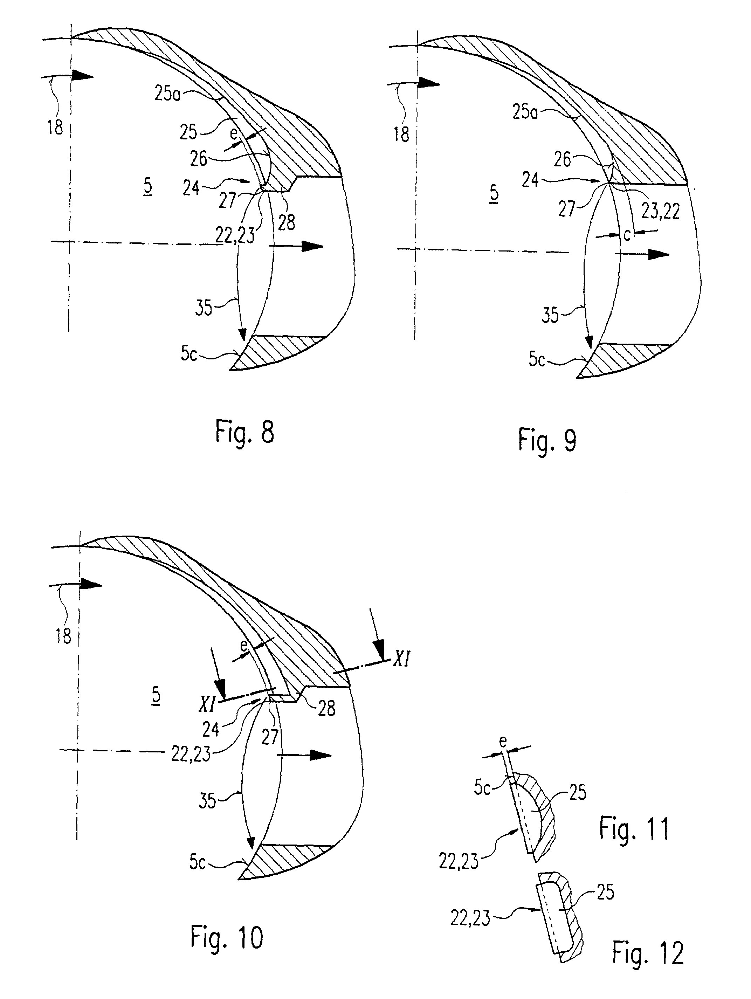

Der Turbine 3 ist im der Auslaßöffnung 12 in der Drehrichtung 18 vorgeordneten Bereich ein Mittel 22 zugeordnet, das im Funktionsbetrieb der Turbine 3 das in der Turbinenkammer 5 in der Drehrichtung 18 rotierende Druckmittel an der Auslaßöffnung 12a vorbei lenkt. Das Mittel 22 ist durch einen in den Strömungsweg hineinragenden Srömungssteg 23 gebildet, der im Bereich des bezüglich der Strömungsrichtung 18 ersten Randes 24 der Auslaßöffnung 12a angeordnet ist und die Strömung von der Auslaßöffnung 12a nach innen ablenkt, so daß diese erst hinter der Auslaßöffnung 12a zur Umfangswand 5c der Turbinenkammer 5 gelangt. Funktionell ist der Steg 23 vergleichbar mit einer Sprungschanze, an der die Strömung über die Auslaßöffnung 12a gehoben wird und dadurch am Austritt durch die Auslaßöffnung 12a gehindert wird. Da das Maß c, mit dem der Steg 23 als Strömungsstufe in die rotierende Druckmittelströmung hineinragt, größer sein kann, als der radiale Abstand zwischen der Umfangswand 5c der Turbinenkammer 5 und dem Turbinenrad 4, ist in der Umfangswand 5c in der Flucht der vorhandenen Breite L2 der Auslaßöffnung 12a eine Strömungsnut 25 in der Umfangswand 5c angeordnet, die sich flach in die Umfangswand 5c vertieft und gemäß Fig. 8 und 9 mit einer stärkeren konkaven Rundung zum Rand 24 ausläuft und eine Ablenkfläche 26 bildet, wodurch der Steg 23 gebildet ist. Die Grundfläche der Strömungsnut 25 weist etwa die Form einer Parabel mit einer in Strömungsrichtung zur Abrißkante 27 hinzunehmenden konkaven Krümmung auf. Bei der vorliegenden Ausgestaltung beginnt die Strömungsnut 25 im Bereich der Y-Achse des zugehörigen Querschnittsquadranten, dessen X-Achse durch die Auslaßöffnung 12a verläuft. Es ist vorteilhaft, die gerundete Ablenkfläche 26 der Strömungsnut 25 an einer spitzen Kante des Stegs 23 auslaufen zu lassen, um einen störungsfreien Abriß der Strömung an der Abrißkante 27 zu erreichen. Dabei ist es im weiteren vorteilhaft, wenn der Steg 23 sich gerade erstreckt. Da jedoch der Rand 24 der runden Auslaßöffnung 12a und der Strömungssteg 23 gemäß Fig. 9 bogenförmig gekrümmt verlaufen und deshalb ein sich gerade erstreckender Steg 23 nicht realisierbar ist, wird gemäß Fig. 2, 8 und 10 bei der gleiche oder vergleichbare Teile mit gleichen Bezugszeichen versehen sind, ein Steg 23 vorgeschlagen, der bezüglich des eigentlichen Randes 24 der Auslaßöffnung 12a zur Öffnungsmitte hin versetzt ist und so daß er sich sekantial zur gerundeten Lochquerschnittsform erstreckt. Um diesen Versatz zu ermöglichen, ist der Strömungssteg 23 auf einem Basissteg 28 angeordnet, der den Strömungssteg 23 trägt und mit dem Strömungssteg 23 einteilig an den Körper des Gehäuses 1a angeformt ist.

Die Ausgestaltung nach Fig. 10, bei der gleiche oder vergleichbare Teile mit gleichen Bezugszeichen versehen sind, unterscheidet sich von der Ausgestaltung nach Fig. 9 lediglich dadurch, daß die rampenförmig zum Strömungssteg 23 ansteigende Ablenkfläche 26 fehlt. Anstelle dieser Ablenkfläche 26 erstreckt sich die Grundfläche 25a der Strömungsnut 25 kreisbogenförmig weiter bis zu einer als dünner Strömungssteg 23 gebildeten Begrenzung.

Wie die Fig. 11 und 12 erkennen lassen, kann die Querschnittsform der Strömungsnut 25 verschiedene Formen aufweisen. Bei der Ausgestaltung nach Fig. 11 ist eine kreisabschnittförmige Querschnittsform vorgesehen. Bei der Ausgestaltung nach Fig. 12 ist eine rechteckförmige Querschnittsform vorgesehen, wobei die Kanten vorzugsweise gerundet sind.

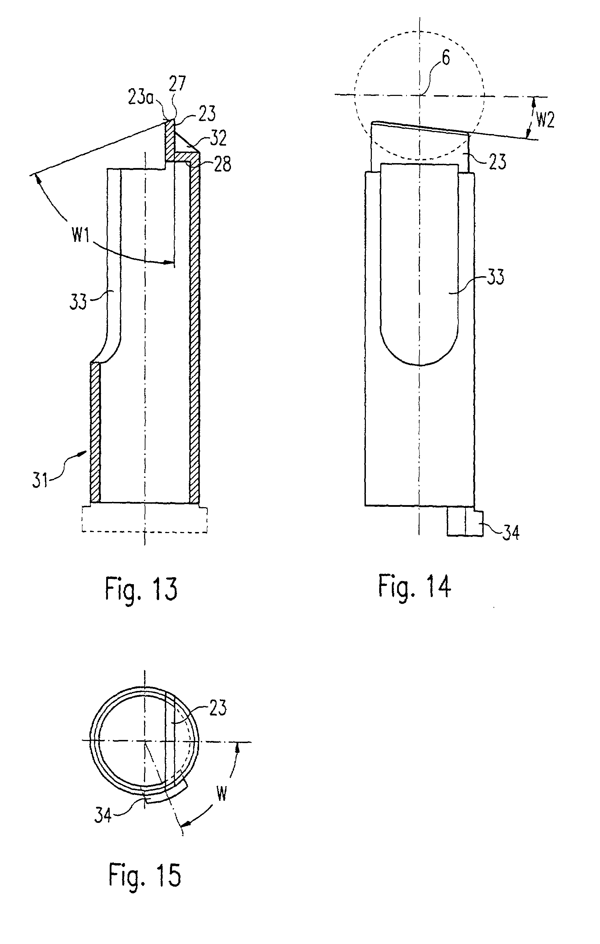

Bei der Ausgestaltung nach Fig. 13 bis 15, bei der gleiche oder vergleichbare Teile ebenfalls mit gleichen Bezugszeichen versehen sind, unterscheidet sich von den vorbeschriebenen Ausführungsbeispielen dadurch, daß der Strömungssteg 23 nicht am Körper des Gehäuses 1a bzw. Handstücks 1 sondern an einer Hülse oder Buchse 31 angeordnet ist, die so weit in den Abführkanal 12 fest eingesetzt ist, daß der Strömungssteg 23 die Grundfläche 25a der Strömungsnut 25 überragt und sich am oder in der Nähe des Randes 24 befindet. Bei der vorliegenden Ausgestaltung ist eine dünne Blechbuchse vorgesehen, die an ihrem vorderen Ende sekantial nach innen versetzt den Strömungssteg 23 aufweist, der an einer kreisbogenabschnittförmigen Stirnwand angeordnet ist, die den Basissteg 28 bildet. Der Strömungssteg 23 kann durch ein sogenanntes Knotenblech 32 stabilisiert sein. In dem Strömungssteg 23 gegenüberliegenden Umfangsbereich der Buchse 31 ist eine Aussparung oder Schlitzöffnung 33 vorgesehen, die insbesondere bei einer verbreiterten Auslaßöffnung 12a die Verbreiterung gewährleistet. Am hinteren Rand der Buchse 31 kann wenigstens ein radial abstehender Randwinkel 34 vorgesehen sein, der einen Anschlag zur Begrenzung der Verschiebung der Buchse 31 nach innen und/oder eine Drehsicherung bilden kann und bezüglich der die Schlitzöffnung 33 enthaltenen Längsebene um einen Winkel W von etwa 60° verdreht angeordnet sein kann.

Wie insbesondere Fig. 13 deutlich zeigt, kann die Stirnfläche 23a des Strömungsstegs 23 durch einen Freiwinkel hinterschnitten sein, so daß der Keilwinkel W 1 des Strömungsstegs 23 etwa 50 bis 85, insbesondere etwa 68° beträgt.

Des weiteren kann die Stirnfläche 23a oder Strömungsstegkante 27 in der Blickrichtung längs der Längsmittelachse zu einer Seite hin schräg geneigt sein, z.B. um einen Winkel W2 von etwa 3° bis 10°, insbesondere etwa 5°. Hierbei handelt es sich um den in Fig. 1 dargestellten Winkel W3, mit dem der Griffabschnitt des Handstücks und/oder der Auslaßkanal 12 bezüglich der Radialebene der Turbine nach oben abgewinkelt ist.

Bei allen Ausführungsbeispielen kann der Strömungssteg 23 um ein Maß e die Umfangswand 5c überragen, so daß er um dieses Maß e in den freien Raum der Turbinenkammer 5 hineinragt. Dieses Maß e ist kleiner zu bemessen, als das radiale Bewegungsspiel zwischen dem Turbinenrad 4 und der Umfangswand 5c, so daß zwischen dem Turbinenrad 4 und dem Strömungssteg 23 ein Bewegungsspiel besteht.

Nachfolgend wird die Funktion der Turbine 3 beschrieben. Im Funktionsbetrieb wird das Turbinenrad 4 durch den durch die Einlaßöffnung 11a sekantial einströmenden Druckmittelstrahl angetrieben. Dabei wird der Druckmittelstrahl zwischen den Mittelstegen 16 und der Seitenwand 5a geführt, wobei dem Turbinenrad 4 aufgrund der Schräglage der Mittelstege 16 ein zusätzliches Drehmoment übertragen wird. Außerdem bewirken die Mittelstege 16, daß das Druckmittel einseitig auf die Schaufeln 14 auftrifft, diese axial durchströmt und sich in der Ringkammer 19 zu entspannen vermag, von wo es während der Rotation, an der das Druckmittel teilnimmt, in die bezüglich der Einlaßöffnung 11a jenseits der Längsmittelebene E angeordnete Strömungsnut 25 und zum Strömungssteg 23 gelangt, wo die Strömung schräg oder leicht bogenförmig nach innen vom der Auslaßöffnung 12a vorbei gelenkt wird und hinter der Auslaßöffnung 12a aufgrund der Fliehkraft wieder zur Umfangswand 5c der Turbinenkammer 5 gelangt. Der Ablenkungs-Strömungsabschnitt ist durch einen Pfeil dargestellt und in den Fig. 8 bis 10 mit 35 bezeichnet. Der abgelenkte Strömungsabschnitt 35 bildet einen Strömungsvorhang vor der Auslaßöffnung 12a, so daß ein Austritt des sich in der Turbinenkammer 5 befindlichen Druckmittels durch die Auslaßöffnung 12a verhindert ist. Infolgedessen kann sich auch kein schädlicher Unterdruck in der Turbinenkammer 5 aufbauen, der zu der unerwünschten Ein- bzw. Rücksaugung in die Turbinenkammer 5 führen würde. Im Funktionsbetrieb der Turbine 3, d.h. dann, wenn sie mit dem unter Druck stehenden Druckmittel angetrieben wird, baut sich dagegen in der Turbinenkammer 5 ein so großer Druck auf, daß der durch den abgelenkten Strömungsabschnitt 35 gebildete Strömungsvorhang vor der Auslaßöffnung 12 durchbrochen wird und verbrauchtes Druckmittel kontinuierlich abgeführt wird.

Wie Fig. 1 erkennen läßt, ist die Breite L2 der Auslaßöffnung 12a größer bemessen als die Breite d der Ringkammer 19 und gegebenenfalls auch zuzüglich der Dicke f der Stegscheibe 21. Bei der vorliegenden Ausgestaltung beträgt die Abmessung L2 etwa die halbe axiale Breite g der Turbinenkammer 5. Diese Breite weist auch die Strömungsausnehmung 25 auf. Die Breite g der Ringkammer 19 kann einschließlich der Stegbreite f etwa der halben Breite L2 der Auslaßöffnung 12a betragen oder auch größer sein.

Die erfindungsgemäße Verhinderung der Pumpenwirkung beim Nachlaufen des Turbinenrades 4 findet sowohl in dem oberen Bereich der Auslaßöffnung 12a statt, der der Ringnut 19 gegenüberliegt, als auch in dem unteren Bereich der Auslaßöffnung 12a, der den Schaufeln 14 direkt gegenüberliegt.

Das Handstück 1, das Turbinenrad 4 und die Buchse 31 bestehen vorzugsweise aus Metall.

Bei der vorherigen Beschreibung wurde aus Vereinfachungsgründen der Begriff Druckmittel" für das die Turbine 3 insgesamt durchströmende Gas, insbesondere Druckluft, benutzt. Es wird darauf aufmerksam gemacht, daß dies eigentlich nur für den antreibenden Druckmittelstrahl zutrifft, denn der im austretenden Gas vorhandene Druck Druck ist nur wenig größer als der Atmosphärendruck und deshalb kaum noch ein Druckmittel". Aus Vereinfachungsgründen ist jedoch die Verwendung des Begriffs "Druckmittel" insgesamt gerechtfertigt.

## Patentansprüche

1. Turbinen-Handstück (1), insbesondere für medizinische oder dentalmedizinische Zwecke, mit einer im vorderen Endbereich des Handstücks (1) drehbar gelagerten Antriebswelle (2), mit der ein Werkzeug durch eine Spannvorrichtung verbindbar ist, wobei auf der Antriebswelle (2) drehfest ein Turbinenrad (4) in einer Turbinenkammer (5) angeordnet ist, in die an einer Einlaßöffnung (11a) eine Zuführleitung (11) für ein strömendes Druckmittel mündet und von der sich an einer Auslaßöffnung (12a) eine Abführleitung (12) erstreckt, wobei ein Mittel (22) vorgesehen ist, das nach einer Abschaltung der Druckmittelzuführung während des Nachlaufens des Turbinenrades (4) einen Auslaß des in der Turbinenkammer (5) rotierenden Druckmittels durch die Abführleitung verhindert, wobei das Mittel (22) im Bereich der Turbinenkammer (5) angeordnet ist,
**dadurch gekennzeichnet,**
**daß** das Mittel (22) durch einen in den Strömungsweg hineinragenden Strömungssteg (23) gebildet ist, der im Bereich des bezüglich der Strömungsrichtung (18) ersten Randes (24) der Auslaßöffnung (12a) angeordnet ist, und der im Funktionsbetrieb das in der Turbinenkammer (5) rotierende Druckmittel an der Auslaßöffnung (12a) vorbei lenkt.

2. Handstück nach Anspruch 1,
**dadurch gekennzeichnet,**
**daß**. das Mittel (22) die Strömung sekantial an der Auslaßöffnung (12a) vorbei lenkt.

3. Handstück nach Anspruch 1 oder 2,
**dadurch gekennzeichnet,**
**daß** der Strömungssteg (23) im Funktionsbetrieb eine Strömungsstufe (c) für das rotierende Druckmittel bildet.

4. Handstück nach Anspruch 3,
**dadurch gekennzeichnet,**
**daß** der Strömungssteg (23) im Bereich des bezüglich der Drehrichtung (18) des rotierenden Druckmittels ersten Randes (24) der Auslaßöffnung (12a) angeordnet ist.

5. Handstück nach Anspruch 3 oder 4,
**dadurch gekennzeichnet,**
**daß** der Strömungssteg (23) sich bezüglich der Abführungsleitung (12) sekantial erstreckt.

6. Handstück nach einem der vorherigen Ansprüche,
**dadurch gekennzeichnet,**
**daß** dem Strömungssteg (23) eine sich in die Drehrichtung (18) erstreckende Strömungsnut (25) vorgeordnet ist.

7. Handstück nach Anspruch 6,
**dadurch gekennzeichnet,**
**daß** die Strömungsnut (25) mit einer schrägen oder konkav gerundeten Ablenkfläche (26) am Strömungssteg (23) ausläuft.

8. Handstück nach Anspruch 6 oder 7,
**dadurch gekennzeichnet,**
**daß** die Strömungsnut (25) eine gerundete oder rechteckige Querschnittsform, insbesondere mit gerundeten Ecken aufweist.

9. Handstück nach einem der Ansprüche 6 bis 8,
**dadurch gekennzeichnet,**
**daß** die Tiefe der Strömungsnut (25) bis zur Ablenkfläche (26) kontinuierlich zunimmt.

10. Handstück nach einem der vorherigen Ansprüche,
**dadurch gekennzeichnet,**
**daß** die Einlaßöffnung (11a) bezüglich der radialen Mittelebene der Turbinenkammer (5) axial versetzt ist.

11. Handstück nach einem der vorherigen Ansprüche,
**dadurch gekennzeichnet,**
**daß** die Auslaßöffnung (12a) längs der Drehachse (6) zu einer Seite der Turbinenkammer (5) hin versetzt ist, insbesondere zur der Einlaßöffnung (11a) entgegengesetzten Seite hin versetzt ist.

12. Handstück nach einem der vorherigen Ansprüche,
**dadurch gekennzeichnet,**
**daß** die Auslaßöffnung (12a) die Form eines sich in Umfangsrichtung länglich erstreckenden Langlochs aufweist.

13. Handstück nach einem der Ansprüche 11 oder 12,
**dadurch gekennzeichnet,**
**daß** das Turbinenrad (4) der Auslaßöffnung (12a) gegenüberliegend eine Ringkammer (19) aufweist.

14. Handstück nach Anspruch 13,
**dadurch gekennzeichnet,**
**daß** die längs der Drehachse (6) gerichtete Abmessung (L2) der Auslaßöffnung (12a) etwa gleich oder größer ist als die Breite (d) der Ringkammer (19).

15. Handstück nach einem der vorherigen Ansprüche,
**dadurch gekennzeichnet,**
**daß** die Einlaßöffnung (11a) bezüglich der radialen Mittelebene der Turbinenkammer (5) zu einer Seite hin versetzt ist (a), und daß die Schaufeln (14) des Turbinenrades (4) an dieser Seite von der gegenüberliegenden Seitenwand (5a) der Turbinenkammer (5) mit Bewegungsspiel begrenzt sind sowie das Druckmittel axial zur anderen Seite in eine Ringkammer (19) leiten, der die Auslaßöffnung (12a) radial gegenüberliegt.

16. Handstück nach einem der Ansprüche 3 bis 15,
**dadurch gekennzeichnet,**
**daß** der Strömungssteg (23) an einer in der Abführleitung (12) vorzugsweise von hinten eingesetzten Buchse (31) angeordnet ist.

## Claims

1. Turbine handpiece (1), in particular for medical or dental-medical purposes, having a drive shaft (2), rotatably mounted in the forward end region of the handpiece (1), with which a tool can be connected by means of a mounting device, whereby there is arranged on the drive shaft (2), fixed for rotation therewith, a turbine wheel (4) in a turbine chamber (5), into which a delivery line (11) for a flowing pressure medium opens at an inlet opening (11a) and from which a discharge line (12) extends at an outlet opening (12a), whereby a means (22) is provided which after a switching-off of the pressure medium supply, during the running on of the turbine wheel (4), prevents a release of the pressure medium rotating in the turbine chamber (5) through the discharge line, the means (22) being arranged in the region of the turbine chamber (5),
**characterised in that**,
the means (22) is formed by a flow web (23) which projects into the flow path, which flow web is arranged in the region of the first - with reference to the direction of flow (18) - edge (24) of the outlet opening (12a), and which in functional operation deflects the pressure medium rotating in the turbine chamber (5) past the outlet opening (12a).

2. Handpiece according to claim 1,
**characterised in that**,
the means (22) deflects the flow secantially past the outlet opening (12a).

3. Handpiece according to claim 1 or 2,
**characterised in that**,
in functional operation the flow web (23) forms a flow step (c) for the rotating pressure medium.

4. Handpiece according to claim 3,
**characterised in that**,
the flow web (23) is arranged in the region of the first - with reference to the direction of rotation (18) of the rotating pressure medium - edge (24) of the outlet opening (12a).

5. Handpiece according to claim 3 or 4,
**characterised in that**,
the flow web (23) extends secantially with regard to the discharge line (12).

6. Handpiece according to any preceding claim,
**characterised in that**,
a flow groove (25), extending in the direction of rotation (18), is arranged before the flow web (23).

7. Handpiece according to claim 6,
**characterised in that**,
the flow groove (25) runs out at the flow web (23) with an oblique or concavely rounded deflection surface (26).

8. Handpiece according to claim 6 or 7,
**characterised in that**,
the flow groove (25) has a rounded or right-angled cross-sectional form, in particular with rounded corners.

9. Handpiece according to any of claims 6 to 8,
**characterised in that**,
the depth of the flow groove (25) continuously increases up to the deflection surface (26).

10. Handpiece according to any preceding claim,
**characterised in that**,
the inlet opening (11a) is axially off-set with regard to the radial middle plane of the turbine chamber (5).

11. Handpiece according to any preceding claim,
**characterised in that**,
the outlet opening (12a), longitudinally of the axis of rotation (6), is offset towards one side of the turbine chamber (5), in particular is offset towards the side opposite the inlet opening (11a).

12. Handpiece according to any preceding claim,
**characterised in that**,
the outlet opening (12a) has the form of an elongate hole extending longitudinally in the peripheral direction.

13. Handpiece according to any of claims 11 or 12,
**characterised in that**,
the turbine wheel (4) has an annular chamber (19) lying opposite the outlet opening (12a).

14. Handpiece according to claim 13,
**characterised in that**,
the dimension (L2) of the outlet opening (12a) directed longitudinally of the axis of rotation (6) is approximately the same as or greater than the width (d) of the annular chamber (19).

15. Handpiece according to any preceding claim,
**characterised in that**,
with regard to the radial middle plane of the turbine chamber (5), the inlet opening (11a) is offset (a) towards one side, and **in that** the blades (14) of the turbine wheel (4) are bounded on this side by the oppositely lying side wall (5a) of the turbine chamber (5), with play for movement, and direct the pressure medium axially to the other side into an annular chamber (19) which lies radially opposite the outlet opening (12a).

16. Handpiece according to any of claims 3 to 15,
**characterised in that**,
the flow web (23) is arranged at a bushing (31) placed in the discharge line (12) preferably from the rear.

## Revendications

1. Pièce à main de turbine, en particulier pour des applications médicales ou médico - dentaires, avec un arbre d'entraînement (2) logé de façon rotative dans la zone d'extrémité avant de la pièce à main (1), arbre auquel peut être raccordé un outil par l'intermédiaire d'un dispositif de serrage, de sorte qu'une roue de turbine (4) est disposée sur l'arbre d'entraînement (2) de façon rigide en rotation dans une chambre de turbine (5), dans laquelle débouche une conduite d'amenée (11) au niveau d'une ouverture d'admission (11a) pour un agent de pression en écoulement, et à partir de laquelle s'étend une conduite d'évacuation (12) au niveau d'une ouverture d'évacuation (12a), de sorte qu'il est prévu un moyen (22) qui, après une coupure de l'amenée de l'agent de pression pendant la poursuite de la marche de la roue de turbine (4), empêche une sortie de l'agent de pression en rotation dans la chambre de turbine (5) par la conduite d'évacuation, le moyen (22) étant disposé dans la zone de la chambre de turbine (5),
**caractérisée en ce que**,
le moyen (22) est formé d'une ailette d'écoulement (23) faisant saillie dans la voie d'écoulement, ailette qui est agencée dans la zone du premier bord (24) de l'ouverture d'évacuation (12a) par rapport au sens d'écoulement (18) et qui, en fonctionnement, guide l'agent de pression en rotation dans la chambre de turbine (5) près de l'ouverture d'évacuation (12a).

2. Pièce à main selon la revendication 1, **caractérisée en ce que**, le moyen (22) guide l'écoulement séquentiellement près de l'ouverture d'évacuation (12a).

3. Pièce à main selon la revendication 1 ou 2, **caractérisée en ce que**, l'ailette d'écoulement (23) , en fonctionnement, forme un gradin d'écoulement ( c) pour l'agent de pression en rotation.

4. Pièce à main selon la revendication 3, **caractérisée en ce que**, l'ailette d'écoulement (23) est agencée au niveau du premier bord (24) de l'ouverture d'évacuation (12a) par rapport au sens de rotation (18) de l'agent de pression en rotation.

5. Pièce à main selon la revendication 3 ou 4, **caractérisée en ce que**, l'ailette d'écoulement (23) s'étend séquentiellement par rapport à la conduite d'évacuation (12).

6. Pièce à main selon l'une des revendications précédentes, **caractérisée en ce que**, une rainure d'écoulement (25) s'étendant dans le sens de rotation (18) est agencée en amont de l'ailette d'écoulement (23).

7. Pièce à main selon la revendication 6, **caractérisée en ce que**, la rainure d'écoulement (25) se termine par une surface de déviation (26) oblique ou concave sur l'ailette d'écoulement (23).

8. Pièce à main selon la revendication 6 ou 7, **caractérisée en ce que**, la nervure d'écoulement (25) présente une forme de section transversale ronde ou carrée, en particulier avec des coins arrondis.

9. Pièce à main selon la revendication 6 à 8, **caractérisée en ce que**, la profondeur de la rainure d'écoulement (25) va en augmentant continuement jusqu'à la surface de déviation (26).

10. Pièce à main selon l'une des revendications précédentes, **caractérisée en ce que**, l'ouverture d'entrée (11a) est décalée axialement par rapport au plan médian radial de la chambre de turbine (5).

11. Pièce à main selon l'une des revendications précédentes, **caractérisée en ce que**, l'ouverture d'évacuation (12a) est décalée le long de l'axe de rotation (6) vers un côté de la chambre de turbine (5), en particulier vers le côté opposé à l'ouverture d'entrée (11a).

12. Pièce à main selon l'une des revendications précédentes, **caractérisée en ce que**, l'ouverture d'évacuation (12a) présente la forme d'un trou oblong s'étendant longitudinalement dans la direction périphérique.

13. Pièce à main selon l'une des revendications 11 ou 12, **caractérisée en ce que**, la roue de turbine (4) présente une chambre circulaire (19) située à l'opposé de l'ouverture d'évacuation (12a).

14. Pièce à main selon la revendication 13, **caractérisée en ce que**, la dimension (L2) de l'ouverture d'évacuation (12a) dirigée le long de l'axe de rotation (6) est sensiblement identique ou supérieure à la largeur (d) de la chambre annulaire (19).

15. Pièce à main selon l'une des revendications précédentes, **caractérisée en ce que**, l'ouverture d'admission (11a) est décalée vers un côté par rapport au plan médian radial de la chambre de turbine (5), et **en ce que** les pales (14) de la roue de turbine (4) sont limitées sur ce côté par la paroi latérale en regard (5a) de la chambre de turbine (5) avec un jeu de mouvement et guident ainsi l'agent de pression axialement vers l'autre côté dans une chambre annulaire (19) qui est disposée radialement à l'opposé de l'ouverture d'évacuation (12a).

16. Pièce à main selon l'une des revendications 3 à 15, **caractérisée en ce que**, l'ailette d'écoulement (23) est disposée dans une douille (31) introduite dans la conduite d'évacuation (12) de préférence par l'arrière.
